(19) Europäisches Patentamt
European Patent Office
Office européen des brevets

(11) Veröffentlichungsnummer: **0 301 403 B1**

(12) **EUROPÄISCHE PATENTSCHRIFT**

(45) Veröffentlichungstag der Patentschrift: **15.07.92**

(51) Int. Cl.[5]: **C08G 18/80**, C09D 5/44

(21) Anmeldenummer: **88111748.5**

(22) Anmeldetag: **21.07.88**

# (54) Härtungskomponente für Kunstharze, diese enthaltende härtbare Mischungen sowie deren Verwendung.

(30) Priorität: **25.07.87 DE 3724699**

(43) Veröffentlichungstag der Anmeldung:
**01.02.89 Patentblatt 89/05**

(45) Bekanntmachung des Hinweises auf die Patenterteilung:
**15.07.92 Patentblatt 92/29**

(84) Benannte Vertragsstaaten:
**AT BE CH DE FR GB IT LI**

(56) Entgegenhaltungen:
**EP-A- 0 118 743**
**EP-A- 0 154 678**

(73) Patentinhaber: **HOECHST AKTIENGESELLSCHAFT**
**Postfach 80 03 20**
**W-6230 Frankfurt am Main 80(DE)**

(72) Erfinder: **Vorwerk, Edgar, Dr.**
**Geisenheimer Strasse 88**
**W-6000 Frankfurt am Main 71(DE)**
Erfinder: **Finke, Manfred, Dr.**
**Behringstrasse 25**
**W-6233 Kelkheim (Taunus)(DE)**
Erfinder: **Lenz, Rüdiger, Dr.**
**Geisenheimer Strasse 88**
**W-6000 Frankfurt am Main 71(DE)**

EP 0 301 403 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Härtung, d.h. Vernetzung von Hydroxy- und/oder Aminogruppen enthaltenden Polymeren und Polykondensaten mit blockierten Polyisocyanaten ist seit langem bekannt und Stand der Technik; siehe dazu z.B. Petersen, Liebigs Ann. Chem. 562, 205 (1949). Also blockierte Polyisocyanate sind dabei Umsetzungsprodukte von Polyisocyanaten mit bestimmten Substanzen (Verkappungsmitteln), z.B. speziellen Alkoholen, Aminen, sonstigen Hydroxyverbindungen und Mercaptanen zu verstehen. Diese Umsetzungsprodukte sind bei Raumtemperatur, insbesondere in Gegenwart reaktiver Verbindungen, wie Alkoholen und Aminen, beständig, spalten jedoch bei erhöhter Temperatur das spezielle Verkappungsmittel ab. Dadurch wird kurzzeitig das ursprüngliche Isocyanat regeneriert, das dann mit den Hydroxy- und/oder Aminogruppen des Polymeren sofort zu temperaturstabilen Urethanen bzw. Harnstoffen abreagiert, so daß vernetzte Lackfilme entstehen.

Es ist nur von besonderem wirtschaftlichen und technischen Interesse, diese Härtung von Lackfilmen mittels verkappter Isocyanate bei möglichst tiefer Temperatur durchzuführen. Einerseits bedingt eine verminderte Härtungs- bzw. Einbrenntemperatur unmittelbar einen verminderten Energieaufwand und führt somit zu Einsparungen. Andererseits erfordert die aktuelle Entwicklung im Automobilbau die Verwendung von Lacksystemen mit Härtungs-bzw. Einbrenntemperaturen, die es erlauben, die Metallkarosserie zusammen mit daran montierten Kunststoffteilen zu beschichten. Da Kunststoffe im allgemeinen thermisch weniger stabil als Metalle sind, muß bei höheren Einbrenntemperaturen mit Formveränderungen der Kunststoffteile gerechnet werden.

Technologisch ergäbe sich daher aus der Absenkung der heute üblichen Einbrenntemperatur von etwa 160 °C auf etwa 130 °C ein erheblicher Vorteil.

In der EP-Offenlegungsschrift 118 743 werden nun neuartige Urethane durch Umsetzung von Polyisocanaten mit Derivaten von 2-Hydroxyalkansäuren, insbesondere Glykolsäure beschrieben, die als Härter für wasserstoffaktive Verbindungen beansprucht werden. Als Einbrenntemperaturen werden dabei zwar 120 bis 130 °C angegeben, die so erhaltenen Lackfilme weisen aber eine unzureichende Lösungsmittelbeständigkeit auf. Die verwendeten Glykolsäure-Derivate, wie z.B. Glykolsäureamide haben außerdem den Nachteil, schwer flüchtig zu sein, so daß nach erfolgter Reaktion das freigesetzte Verkappungsmittel auf der Lackoberfläche verbleibt, ohne bei den angewendeten Temperaturen zügig zu verdampfen.

Pyrazole- insbesondere 3,5-Dimethylpyrazol - werden in der EP-Offenlegungsschrift 159 117 als Schutzgruppen für Polyisocyanate offenbart. Die mit derartigen Pyrazolen blockierten Polyisocyanate härten zwar polymere Umsetzungsprodukte aus Epoxiden und Aminen bei Temperaturen ab 130 °C. Die mit diesen Pyrazolen blockierten Polyisocyanate sind aber in Gegenwart primärer und sekundärer Aminogruppen enthaltender Substanzen -insbesondere in wäßrigen Systemen - nicht ausreichend lagerstabil, so daß ihre Verwendung zumindest in solchen wäßrigen Anwendungssystemen kaum in Frage kommt.

Auch die in der EP-Offenlegungsschrift 189 727 beschriebenen Reaktionsprodukte längerkettiger Alkanonoxime mit aromatischen Polyisocyanaten härten Epoxid-Amin-Umsetzungsprodukte beginnend ab 120 °C. Der Nachteil dieser verkappten Polyisocyanate ist in ihrer ungenügenden Stabilität insbesondere in wäßrigen Anwendungen zu sehen, so daß sich auch hier das Problem ungenügender Lagerstabilität stellt.

Die kürzlich erschienene EP-Offenlegungsschrift 206 071 betrifft schließlich mit Furfurylalkohol blockierte Polyisocyanate als Härter für kathodische Elektrotauchlacke. Diese mit Furfurylalkohol blockierten Polyisocyanate beginnen erst ab 135 °C zu härten; eine völlige Deblockierung erfordert daher entweder längere Erhitzungszeiten oder höhere Temperaturen.

Es bestand daher ein Bedürfnis nach Härtern auf Basis von teil- oder vollständig blockierten Polyisocyanaten für Bindemittel (Kunstharze) mit aktivem Wasserstoff, wobei diese Härter bei Raumtemperatur oder bei leicht erhöhten Temperaturen in Gegenwart dieser Kunstharze über eine lange Dauer stabil sein, im Temperaturbereich von 120 bis 130 °C zügig und vollständig deblockieren und zu einer guten Vernetzung dieser Kunstharze führen sollen.

Hierzu schlägt die Erfindung eine Härtungskomponente (A) auf Basis von Polyisocyanaten für Bindemittel (B), die Gruppen mit aktivem Wasserstoff enthalten, vor, wobei diese Härtungskomponente (A) dadurch gekennzeichnet ist, daß sie ein Umsetzungsprodukt aus Polyisocyanaten (a1) mit $\alpha$-Hydroxyalkylpyridinen (a2) darstellt.

Weiterhin betrifft die Erfindung härtbare Mischungen, welche die Härtungskomponente ( A) enthalten, gegebenenfalls bereits verknüpft mit dem Bindemittel (B), sowie die Verwendung dieser Härtungskomponente in härtbaren Mischungen, insbesondere Lackzubereitungen speziell für die Elektrotauchlackierung.

Die erfindungsgemäßen Härtungskomponenten (A) können - je nach Mengenverhältnis von (a1) und (a2) - neben den durch Reaktion von Isocyanatgruppen mit $\alpha$-Hydroxyalkylpyridinen entstandenen Urethangruppen auch noch nicht umgesetzte Isocyanatgruppen enthalten, d.h. es kann sich bei den Härtern ( A) um

voll- oder teilverkappte Polyisocyanate handeln. Letztere werden direkt mit dem Kunstharz (B) umgesetzt, wodurch - bei Vorhandensein noch freier reaktiver H-Atome - selbstvernetzende Bindemittel entstehen.

Bei den als Verkappungsmittel eingesetzten α-Hydroxyalkylpyridin handelt es sich um die stellungsisomeren 2-, oder 3-, oder 4-Hydroxymethylpyridine selbst sowie um Substitutionsprodukte derselben, wobei die eintretenden Substituenten ein Wasserstoffatom der Hydroxymethylgruppe und/oder des Pyridinrings ersetzen. In Sonderfällen kommen hier auch di-(α-Hydroxyalkyl)-pyridine in Frage. Diese Substituenten sind dabei so zu wählen, daß die Lagerstabilität und die Entkappungstemperatur nicht wesentlich beeinflußt werden. Außerdem sollte dadurch die Flüchtigkeit des Verkappungsmittels nicht allzu sehr erniedrigt werden.

Vorzugsweise besitzen diese α-Hydroxyalkylpyridine die Formel (I)

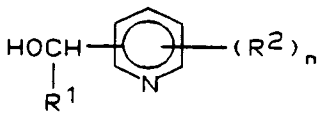

(I)

worin $R^1$, $R^2$ unabhängig voneinander und n folgende Bedeutungen haben:

- $R^1$ = H, verzweigtes oder unverzweigtes Alkyl, vorzugsweise mit 1 bis 12, insbesondere 1 bis 6 C-Atomen, Alkenyl mit 2 bis 12, vorzugsweise 2 bis 6 C-Atomen, Cycloalkyl mit 6 bis 12, vorzugsweise 6 bis 10 C-Atomen, oder Aryl, wie Phenyl, Benzyl, Tolyl, Xylyl, Naphthyl, vorzugsweise Phenyl;
- $R^2$ = H, verzeigtes oder unverzweigtes Alkyl, vorzugsweise mit 1 bis 12, insbesondere 1 bis 6 C-Atomen, ($C_1$-$C_6$)-Alkoxy, vorzugsweise Methoxy oder Ethoxy, Di($C_1$-$C_6$)alkylamino, Halogen, vorzugsweise Chlor oder Brom; bei $n > 1$ können dabei die Reste $R^2$ gleich oder verschieden im Sinne vorstehender Definition sein;
- n = 1 bis 3, vorzugsweise 1 oder 2 und insbesondere 1.

Vorzugsweise steht $R^1$ in obiger Formel für H oder für ($C_1$-$C_6$)Alkyl, wie Methyl, Ethyl, Propyl, Butyl, Pentyl oder für Phenyl und der Pyridinrest weist vorzugsweise keine weiteren Substituenten mehr auf ($R^2$ = H) oder ist zusätzlich durch einen (n = 1) Alkylrest mit 1 bis 6 C-Atomen oder einen ($C_1$-$C_6$)Alkoxyrest, vorzugsweise Methoxy oder Ethoxy, substituiert. Dabei sind α-Hydroxyalkylpyridine mit entsprechend hoher Flüchtigkeit besonders geeignet.

Beispiele für α-Hydroxyalkylpyridine, die erfindungsgemäß als Verkappungsmittel eingesetzt werden können, sind 2-Hydroxymethylpyridin, 3-Hydroxymethylpyridin, 4-Hydroxymethylpyridin, 2-, 3- und 4-(α-Hydroxyethyl)pyridin, 2-, 3- und 4- (α-Hydroxypropyl)pyridin, 2- (Hydroxymethyl)-4-methylpyridin, 2-(Hydroxymethyl)-5-ethylpyridin, 2-(Hydroxymethyl)-6-methylpyridin oder 4-(Hydroxybenzyl)pyridin, 2-(Hydroxymethyl)-6-chlorpyridin oder 3-(Hydroxymethyl)-6-brompyridin.

Auch Gemische von verschiedenen α-Hydroxyalkylpyridinen sind möglich.

Die erfindungsgemäß eingesetzten α-Hydroxyalkylpyridine sind meist literaturbekannte Verbindungen, und es existieren häufig mehrere Herstellungswege so daß hier nur die wichtigsten erwähnt werden sollen.

Die drei isomeren Hydroxymethylpyridine werden technisch durch Reduktion der entsprechenden Pyridinaldehyde erhalten, die ihrerseits durch katalytische Oxidation der Methylpyridine (Picoline) zugänglich sind; siehe dazu: Ullmanns Enzyklopädie d. techn. Chemie - 4. Aufl., Band 19, 605-607.

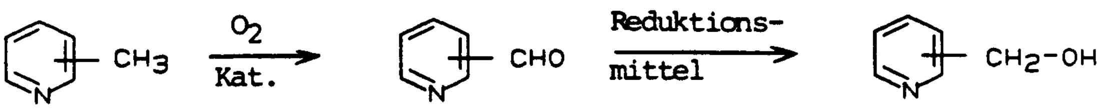


Die Pyridinaldehyde liefern nach Umsetzung mit Grignard-Reagenzien die längerkettigen α-Hydroxyalkylpyridine; z.B.

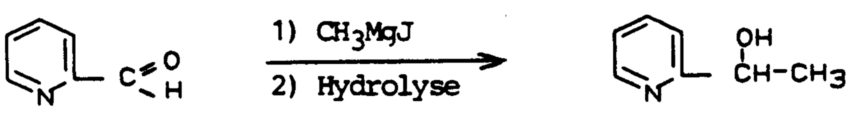

Siehe Luz et al., Helv. 38 [1955] 1144, 1116.

In verschieden substituierten Brompyridinen läßt sich das Halogenatom in der üblichen Weise gegen Metalle austauschen, also in ein Grignard-Reagenz oder z.B. mit Butyllithium in die lithierte Verbindung überführen, die mit aliphatischen oder aromatischen Aldehyden zu den Zielsubstanzen umsetzbar sind, z.B.:

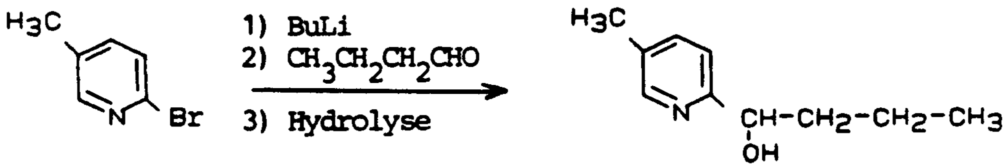


Siehe Leonard Ryder, J. org. Chem. 18 [1953] 598, 605.

Eine weitere Möglichkeit zur Synthese von α-Hydroxyalkylpyridinen besteht in der Umlagerung von alkylierten Pyridin-N-oxiden in z.B. Acetanhydrid (sogenannte Katada-Reaktion) zu α-Acetoxyalkylpyridinen und und anschließender Hydrolyse zu den entsprechenden Alkoholen, z.B:

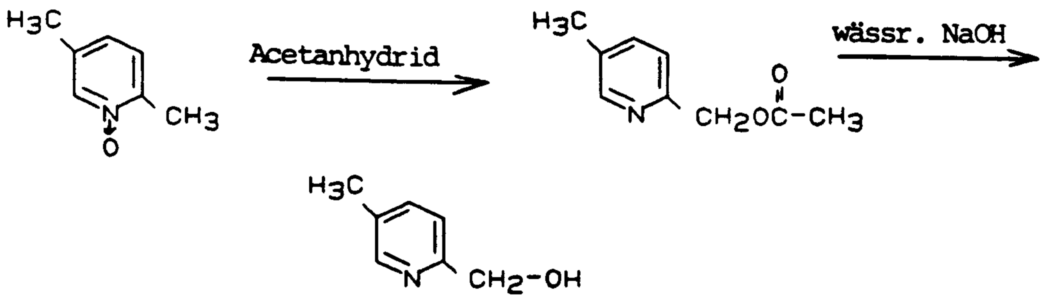


Vgl. Hardegger, Nikles Helv. 40[1957], 2428 ff.

Bei den Polyisocyanaten, die mit den erfindungsgemäßen Verkappungsmitteln zu der Härtungskomponente (A) umgesetzt werden, handelt es sich um die aus der Polyurethan- bzw. Lackchemie bekannten Verbindungen, wie aliphatische, cycloalophatische oder aromatische Polyisocyanate oder entsprechende Präpolymere, gegebenenfalls in Mischung untereinander. Diese Polyisocyanate besitzen mindestens 2 Isocyanatgruppen, vorzugsweise beträgt deren Zahl 2 bis 10 und insbesondere 2 bis 4.

Beispiele für derartige Polyisocyanate sind die aliphatischen Trimethylen-, Tetramethylen-, Pentamethylen-, Hexamethylen-, 1,2-Propylen-, 1,2-Butylen-, 2,3-Butylen-, 1,3-Butylen-, Äthyliden- und Butylidindiisocyanate, 2.2.4-Trimethylhexamethylendiisocyanat, 1,12-Dodecandiisocyanat, Dicycloalkylendiisocyanate wie 1,3-Cyclopentan-, 1,4-Cyclopentan- und 1,2-, 1,3- und 1,4-Cyclohexandiisocyanate sowie Isophorondiisocyanat (IPDI), weiterhin Diisocyanate dimerer Säuren, die aromatischen Diisocyanate, wie 1,3-Phenylen-, 1,4-Phenylen-, 4,4′-Diphenyl-, 1,5-Naphthalin- und 1,4-Naphthalindiisocyanate, 4,4′-Diphenylenmethan-, 2,4-2,6-Toluylen-, 4,4′-Toluidin- und 1,4-Xylylendiisocyanate, Dianisidindiisocyanat, 4 ,4′-Diphenyletherdiisocyanat und Chlordiphenylendiisocyanat, Diphenylmethan-2,4′- und/oder -4,4′-diisocyanat, 3,2′- oder 3,4-Diisocyanato-4-methyldiphenylmethan, die Triisocyanate wie Triphenylmethan 4,4′-4″-Triisocyanat, 1,3,5-Benzoltriisocyanat und 2,4,6-Toluoltriisocyanat und die Tetraisocyanate, wie 4,4′-Diphenyldimethyldimethan-2,2′-5,5′-tetraisocyanat oder Gemische dieser Verbindungen.

Neben diesen einfachen Polyisocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Als Polyisocyanate können weiterhin die polymerisierten Polyisocyanate, wie das Dimere von Toluylendiisocyanat, isocyanurathaltiges Polyisocyanat aus 3-Isocyanatomethyl-3,3,5-trimethyl-cyclohexylisocyanat und dergleichen, oder auch trimerisierte Isocyanate, wie sie etwa in der DE-Patentschrift 951 168 beschrieben sind, eingesetzt werden.

Geeignete Polyisocyanate sind schließlich auch die bekannten, endständigen Isocyanatgruppen aufweisenden Präpolymere, wie sie insbesondere durch Umsetzung der obengenannten einfachen Polyisocyanate, vor allem Diisocyanate mit unterschüssigen Mengen an organischen Verbindungen mit mindestens zwei gegenüber Isocyanatgruppen reaktionsfähigen Gruppen, wie Polyole oder Wasser zugänglich sind. Beispiele für derartige Polyole sind Trimethylolethan, Trimethylolpropan, Pentaerythrit, Di(trimethylolpropan), Dipentaerythrit, Glycerin, Triethanolamin, oxethylierte- und oxpropylierte Derivate der genannten Polyole sowie Umsetzungsprodukte dieser Polyole mit Caprolacton, Carbonsäuren und Epoxiden. Also Beispiel für derartige Präpolymeren sei hier das Umsetzungsprodukt aus 1 Mol Trimethylolpropan mit 3 Mol Toluylendiisocyanat oder IPDI genannt. Weiterhin kommt auch ein Umsetzungsprodukt aus 1 Mol Wasser und 3 Mol Hexamethylendiisocyanat mit einem NCO-Gehalt von 16 bis 17 Gew.-% in Frage. Zur Reaktion mit den Polyisocyanaten sind auch Verbindungen des Molekulargewichtsbereiches von 300 bis 10 000, vorzugsweise von 400 bis 6000, die insgesamt mindestens zwei Aminogruppen und/oder Hydroxylgruppen aufweisen, geeignet, Bevorzugt sind hierbei die entsprechenden Polyhydroxyverbindungen, z.B. die in der Polyurethanchemie an sich bekannten Hydroxypolyester, Hydroxypolyether und/oder hydroxylgruppenhaltige Acrylatharze. Bezüglich derartiger Polyhydroxyverbindungen sei beispielsweise auf die DE-Offenlegungschrift 31 24 784 verwiesen.

In diesen bekannten Präpolymeren entspricht das Verhältnis von Isocyanatgruppen zu NCO-reaktiven Wasserstoffatomen 1,05 bis 10 : 1, vorzugsweise 1,1 bis 3 : 1, wobei die Wasserstoffatome vorzugsweise aus Hydroxylgruppen stammen.

Die Art und Mengenverhältnisse der bei der Herstellung der NCO-Präpolymeren eingesetzten Ausgangsmaterialien werden im übrigen vorzugsweise so gewählt, daß die NCO-Präpolymeren eine mittlere NCO-Funktionalität von 2 bis 4,, vorzugsweise von 2 bis 3 und ein mittleres Molekulargewicht von 500 -10 000, vorzugsweise von 800 bis 4 000 aufweisen.

Zur Herstellung der erfindungsgemäßen Härter (A) werden die Polyisocyanate, zweckmäßigerweise unter Ausschluß von Luftfeuchtigkeit, nach bekannten Verfahren mit den $\alpha$-Hydroxylalkylpyridinen umgesetzt. Das Äquivalentverhältnis der Isocyanatgruppen in den Polyisocyanaten zu den OH-Gruppen der $\alpha$-Hydroxyalkylpyridine beträgt im allgemeinen 2,2:1 bis 0,9:1, vorzugsweise 2:1 bis 1:1.

Die Reaktion wird zweckmäßigerweise im Temperaturbereich von 0 bis 100 °C, vorzugsweise bei 5 bis 80 °C durchgeführt. Die Reaktionszeit beträgt dabei im allgemeinen 2 bis 8 Stunden. Diese Umsetzung verläuft zumeist stark exotherm, so daß auf einen Zusatz von Katalysatoren verzichtet werden kann. Die Verwendung von 0,1 bis 2 Gew.-% eines Katalysators (bezogen auf die Summe von ($a_1$) und ($a_2$)) ist jedoch möglich. Als Katalysatoren kommen z.B. in Frage: tertiäre Amine, wie Triethylamin, Dimethylbenzylamin, 1,4-Diazabicyclo(2,2,2)octan, Metallsalze, wie Dibutylzinndilaurat, Dibutylzinnoxid, Zinnoctoat und Zinkacetylacetonat.

Die Reaktion von (a1) mit (a2) wird im allgemeinen in Gegenwart eines inerten Lösungsmittels durchgeführt. Beispiele für inerte Lösungsmittel sind: Ether wie Diisopropylether, Methyl-t-butylether, Ethylenglykoldimethylether, Diethylenglykoldimethylether, Ketone wie Methylethylketon, Methylisobutylketon, Cyclohexanon, weiterhin Dimethylformamid, N-Methypyrrolidon, Dimethylsulfoxid udgl..

Die Addition der $\alpha$-Hydroxyalkylpyridine an die Isocyanatgruppen kann IR-spektroskopisch oder durch Titration der Isocyanatgruppen mit Dibutylamin kontrolliert werden. Im allgemeinen werden die $\alpha$-Hydroxylalkylpyridine zu den Polyisocyanaten getropft; die umgekehrte Zugabe ist auch möglich und kann im Einzelfall sogar vorteilhaft sein.

Falls bei dieser Umsetzung das Verhältnis von (a1) zu (a2) so gewählt wird, daß (a2) im Unterschuß vorliegt, entstehen nur teilverkappte Polyisocyanate, deren freie Isocyanatgruppen anschließend mit dem Kunstharz (B) zur Reaktion gebracht werden können. Auf diese Weise ist die Härterkomponente (A) direkt in das Kunstharz (B) eingebunden und verleiht diesem selbsthärtende Eigenschaften.

Im Vergleich zu ähnlich aufgebauten Härtern gemäß Stand der Technik, wie z.B. Umsetzungsprodukten von Isocyanaten mit verschiedenen Benzylalkohlen bzw. Furfurylalkoholen oder auch Aminoalkoholen weisen die erfindungsgemäßen Härter (A) überraschenderweise eine um 10 bis 30 °C erniedrigte Entkappungstemperatur auf; zumeist setzt dabei die Härtungsreaktion bereits ab 120 °C ein. Außerdem sind die Härter (A) stabil in Gegenwart von Hydroxyl- und Aminogruppen enthaltenden Polymeren, und zwar auch in wäßrigen Systemen und verfügen über eine gute Hydrolysestabilität sogar in schwach sauren Lösungen. Vorteilhaft ist ferner, daß die freigesetzten $\alpha$-Hydroxyalkylpyridine meist Öle sind, die sich von den Lackoberflächen recht gut abdampfen lassen.

Die Erfindung betrifft weiterhin härtbare Mischungen auf Basis der Härtungskomponente (A), eines Bindemittels (B), das Gruppen mit aktiven Wasserstoff enthält, gegebenenfalls einem Verdünnungsmittel (C), sowie gegebenenfalls Zusatzstoffen (D).

Als Kunstharz (B) kommen die an sich bekannten, mit Polyisocyanaten härtbaren Bindemittel in Frage, die aktiven Wasserstoff enthalten, also funktionelle Gruppen, die mit Isocyanatgruppen unter den Härtungsbedingungen reagieren können. Vorzugsweise handelt es sich hierbei um Hydroxyl-und/oder primäre und/oder sekundäre Aminogruppen, wobei von diesen im Mittel zumindest je zwei pro Molekül vorhanden sind.

Das Molekulargewicht (Zahlenmittel $\overline{M}_n$) von (B), bestimmt mittels Gelchromatographie (Polystyrolstandard), liegt überlicherweise im Bereich von etwa 500 bis 50 000, vorzugsweise etwa 1000 bis etwa 20 000. Vorzugsweise besitzen diese Bindemittel (B) also harzartigen Charakter. In Sonderfällen kann das Molekulargewicht 100 000 oder mehr betragen. Als Polymere kommen dabei Polymerisate, Polykondensate oder Polyadditionsverbindungen in Betracht.

Beispiele für Bindemittel (B) sind OH-gruppenhaltige Kunstharze (Polyole), wie Polyetherpolyole, Polyacetalpolyole, Polyesteramidpolyole, Epoxidharzpolyole, oder deren Umsetzungsprodukte mit $CO_2$, Phenolharzpolyole, Polyharnstoffpolyole, Polyurethanpolyole, Celluloseester und -etherpolyole, teilweise verseifte Homo- und Copolymerisate von Vinylestern, teilweise acetalisierte Polyvinylalkohole, Polyesterpolyole oder Acrylatharzpolyole. Weiterhin kommen hier Phenol-, Harnstoff- oder Melaminharze in Frage. Derartige Polyole, die auch in Mischung eingesetzt werden können, sind beispielsweise in der DE-Offenlegungsschrift 31 24 784 sowie in den EP-Offenlegungsschriften 123 880 und 189 728 beschrieben.

Kunstharze (A), die Hydroxyl- und Aminogruppen enthalten, sind beispielsweise im Journal of Coatings Technology, Vol. 54, No, 686, (1982), S. 33 bis 41 ("Polymer Compositions for Cationic Electrodepositable Coatings") beschrieben, auf das hier gleichfalls Bezug genommen wird. Erwähnt seien hier Polymerisate aus $\alpha,\beta$-olefinisch ungesättigten Monomeren, die Hydroxy- und/oder Aminogruppen enthalten. Die Einführung der Hydroxy- und/oder Aminogruppen kann durch Verwendung entsprechender Monomere bei der Copolymerisation, z.B. durch Hydroxy- oder Aminoester von $\alpha,\beta$-olefinisch ungesättigten Carbonsäuren, wie Hydroxyalkyl(meth)acrylate oder Aminoalkyl(meth)acrylate, erfolgen oder durch polymeranaloge Umsetzung mit Di- oder Polyaminen, z.B. mit N,N-Dimethyl-aminopropylamin, unter Ausbildung von Amid-, Amino- oder Urethangruppen. Eine weitere Gruppe sind die aus dimerisierten Fettsäuren und Polyaminen erhältlichen Polyaminopolyamide. Besonders hierfür geeignet sind Aminopolyetherpolyole, die durch Umsetzung von Ammoniak, primären, sekundären und/oder tertiären Aminen oder Diketiminen bzw. entsprechenden Gemischen mit einem Polyglycidylether zugänglich sind. Dabei sollen zweckmäßigerweise so viele Epoxidgruppen vorhanden sein, daß alle Aminogruppen in tertiäre Aminogruppen umgewandelt werden. Die bevorzugten Polyglycidylether sind Polyglycidylether von Bisphenol A und ähnlichen Polyphenolen. Man kann sie beispielsweise herstellen, indem man ein Polyphenol mit einem Epihalogenhydrin, wie Epichlorhydrin, in Gegenwart von Alkali verethert.

Statt der Polyglycidylether lassen sich auch deren Umsetzungsprodukte mit $CO_2$ einsetzen. Diese Produkte enthalten cyclische Carbonatgruppen, die mit primären Aminen unter Ausbildung von Urethanen eingesetzt werden können. Je nach den Molverhältnissen von Polyglycidylether und $CO_2$ erhält man bei der Reaktion mit $CO_2$ Verbindungen, die keine Epoxidgruppen mehr enthalten, oder Verbindungen, die Epoxidgruppen und cyclische Carbonatgruppen aufweisen. Derartige cyclische Carbonatgruppen lassen sich auch über entsprechende Monomere, welche diese Gruppen enthalten, in die Polymerenkette einführen; siehe hierzu die DE-Patentanmeldungen P 36 44 372.7 und P 36 44 373.5. Die Umsetzung derartiger cyclischer Carbonatgruppen enthaltender Polymere mit Aminen unter Bildung von sogenannten Aminourethanen ist beispielsweise in den EP-Patentanmeldung 87.101 797.6 und 87.107.309.4 sowie in der DE-Patentanmeldung P 36 44 370.0 beschrieben.

Die Polyglycidylether der Polyphenole oder deren Umsetzungsprodukte mit $CO_2$ können als solche mit den Aminen zur Reaktion gebracht werden, jedoch ist es häufig vorteilhaft, einen Teil der reaktionsfähigen Epoxidgruppen mit einem modifizierenden Material umzusetzen, um die Filmeigenschaften zu verbessern. Besonders bevorzugt ist die Umsetzung der Epoxidgruppen mit einem Polyol oder einer Polycarbonsäure.

Die Modifizierung der Aminopolyetherpolyole mit Polyolen oder Polycarbonsäuren erfolgt bevorzugt vor der Umsetzung der Polyglycidylether oder deren Umsetzungsprodukt mit $CO_2$ mit den primären oder sekundären Aminen. Es ist jedoch auch möglich, das Verhältnis des als Ausgangsmaterial verwendeten Polyglycidylethers zu den Aminen so zu wählen, daß ein Überschuß an Epoxygruppen vorhanden ist. Die Epoxygruppen können dann mit den Polycarbonsäuren oder Polyolen umgesetzt werden. Weiterhin ist es möglich, das Endprodukt, das keine Epoxidgruppen mehr enthält, durch Reaktion der Hydroxylgruppen mit Glycidylethern weiter zu modifizieren.

Das Aminoäquivalentgewicht dieser Bindemittel (B) beträgt zweckmäßigerweise 150 bis 4000, vorzugsweise 500 bis 2000, während das Hydroxyläquivalentgewicht, sofern die Bindemittel OH-Gruppen besitzen, im allgemeinen zwischen 150 und 1000, vorzugsweise 200 bis 500 liegt. Die Bindemittel können außerdem C = C-Doppelbindungen enthalten, wobei das C = C-Äquivalentgewicht vorzugsweise 2000 bis 6000 beträgt.

Bei der Verwendung in Elektrotauchlacken ist die Anzahl an basischen Gruppen in dem Bindemittel (B) so zu wählen, daß eine ausreichende Wasserverdünnbarkeit im sauren Milieu gewährleistet ist.

Härter (A) und Bindemittel (B) werden im Falle von nichtselbsthärtenden Systemen (sog. 2-Komponenten-Lacken) im allgemeinen in solchen Verhältnissen gemischt, daß das Äquivalent-Verhältnis von verkappten Isocyanatgruppen zu wasserstoffaktiven Gruppen 0,2 bis 1,5 : 1, vorzugsweise 0,4 bis 1,1 :

1 beträgt. Zumeist wird hierfür die Menge an (A) bei 20 bis 60 Gew.-%, vorzugsweise bei 20 bis 40 Gew.-%, bezogen auf (B), liegen. Auf diese Weise wird in der Regel eine ausreichende Vernetzungsdichte erhalten.

Bei Einsatz als Pulverlack enthält die erfindungsgemäße härtbare Mischung keine Verdünnungsmittel (C). Bei der bevorzugten Verwendung als flüssige Lackzubereitung sind jedoch die üblichen Verdünnungsmittel (C) vorhanden. Als solche kommen beispielsweise die bekannten organischen Lösungsmitttel in Frage wie: halogenierte Kohlenwasserstoffe, Ether, wie Diethylether, 1,2-Dimethoxyethan, Tetrahydrofuran oder Dioxan; Ketone, wie beispielsweise Aceton, Methylethylketon, Methylisobutylketon, Cyclohexanon und ähnliche; Alkohole, wie Methanol, Ethanol, 2-Butoxyethanol, Propanol, Isopropanol, 2-Methoxy-1-propanol, Butanol und Benzylalkohol; Ester wie Butylacetat, Ethylglykolacetat, Methoxypropylacetat; (cyclo)-aliphatische und/oder aromatische Kohlenwasserstoffe, wie Hexan, Heptan, Cyclohexan, Benzol, Toluol, die verschiedenen Xylole sowie aromatische Lösemittel im Siedebereich von ca. 150 bis 180 °C, wie ®Solvesso. Die Lösemittel können dabei einzeln oder im Gemisch eingesetzt werden. Auch Gemische mit Wasser sind möglich.

Im Falle der bevorzugten Verwendung von Wasser als Verdünnungsmittel (C), beispielsweise bei Elektrotauchlacken, enthalten die Bindemittel (B) kationische, anionische oder nicht-ionogene wasserlöslich machende Gruppen. Beispiele für kationische Gruppen sind Ammonium-, Phosphonium- und Sulfoniumkationen und für anionische Gruppen Ammoniumsalze von Carbonsäuren. Als nicht-ionogene Gruppen kommen zum Beispiel Oxethylate und Oxpropylate in Frage.

Speziell zur Herstellung von kathodisch abscheidbaren Elektrotauchlacken werden die zweckmäßigerweise in organischen Lösungsmitteln vorliegenden, vorzugsweise Aminogruppen-haltigen Kunstharze (B) und Härter (A) vermischt, und die Aminogruppen ganz oder teilweise durch Umsetzung mit einer wasserlöslichen Säure, z.B. Ameisensäure, Essigsäure, Milchsäure, Phosphorsäure etc. neutralisiert, bevor mit Wasser verdünnt wird. Die Menge der Säure hängt im Einzelfall von den Eigenschaften des verwendeten Harzes ab und wird im allgemeinen nur so weit durchgeführt, daß das Harz solubilisiert oder dispergiert wird.

Wäßrige Zubereitungen, die einen besonders niedrigen Gehalt an flüchtigen, organischen Lösungsmitteln besitzen, erhält man, wie beispielsweise in der DE-A-36 02 980 beschrieben, durch Abdestillation des in den Bindemitteln von der Herstellung oder Lösung enthaltenen Lösungsmittels. Bevorzugt wird dieser Verfahrensschritt unter vermindertem Druck durchgeführt.

Als übliche Zusatzstoffe im Sinne von (D), die eventuell in der erfindungsgemäßen härtbaren Mischung vorhanden sein können, seien hier - in Abhängigkeit von dem jeweiligen Verwendungszweck - die üblichen Lackadditive wie Pigmente (Eisenoxide, Bleioxide, Bleisilikate, Titandioxid, Bariumsulfat, Zinkoxid, Zinksulfid, Phthalocyaninkomplexe etc.), Pigmentpasten, Antioxidantien, (UV-)Stabilisatoren, Verlauf- bzw. Verdickungsmittel, Entschäumer und/oder Netzmittel, Reaktivverdünner, Füllstoffe (Talkum, Glimmer, Kaolin, Kreide, Quarzmehl, Asbestmehl, Schiefermehl, verschiedene Kieselsäuren, Silikate etc.), zusätzliche Härter und zusätzliche härtbare Verbindungen, Katalysatoren udgl. genannt. Diese Additive können der Mischung gegebenenfalls erst unmittelbar vor der Verarbeitung zugegeben werden.

Als Katalysatoren zur Beschleunigung der Härtung eignen sich beispielsweise Salze oder Komplexe von Metallen, wie beispielsweise Blei, Zink, Eisen, Zinn, Mangan und Wismut. Bevorzugte Metallkatalysatoren sind dabei Dialkylzinndicarboxylate wie Dibutylzinndilaurat, Dibutylzinndiacetat, weiter Dibutylzinnoxid, Bleioctoat und Bleiacetylacetonat. Die Katalysatormenge beträgt im allgemeinen 0,1 bis 2,0 Gew.-%, vorzugsweise 0,5 bis 2 Gew.-% (bezogen auf die Summe von (A) und (B)). Sie kann je nach der Reaktivität der Verbindungen (A) und (B), der Art des gegebenenfalls vorhandenen Lösungsmittels, der Wirksamkeit des Katalysators und der beabsichtigten Verfahrensführung variiert werden. Die Metallkatalysatoren können mit den Ausgangsmaterialien direkt vermischt oder getrennt, in einem geeigneten Bindemittel dispergiert, dem Lack zugesetzt werden.

Der Gehalt an (A) und (B) beträgt - sofern die härtbare Mischung als Dispersion vorliegt - im allgemeinen 10 bis 80 Gew.-% vorteilhafterweise 35 bis 70 Gew.-%.

Zur Herstellung der erfindungsgemäßen härtbaren Mischungen werden die Komponenten (A) und (B) sowie gegebenenfalls zusätzlich (C) und (D) gemischt. Bei Komponenten mit niedriger Viskosität kann dies in Substanz erfolgen, wobei gegebenenfalls auf höhere Temperaturen erwärmt wird. Produkte höherer Viskosität werden - falls die härtbaren Mischung nicht als Pulverlacke eingesetzt werden - vor der Mischung in den erwähnten Verdünnungsmitteln gelöst oder dispergiert.

Die Härtung der erfindungsgemäßen Mischungen läuft sehr rasch ab und liefert bei Temperaturen von 120 bis 140 °C und Einbrennzeiten von 20 bis 40 Minuten bereits Überzüge mit guter Härte und guter Lösungsmittelbeständigkeit.

Die erfindungsgemäßen Mischungen können wegen ihrer günstigen Eigenschaften eine vielseitige

technische Anwendung finden, z.B. zur Herstellung von Formkörpern (Gießharze), für den Werkzeugbau oder zur Herstellung von Überzügen und/oder Zwischenbeschichtungen auf vierlerlei Substraten z.B. auf solchen organischer oder anorganischer Natur, wie Holz, Holzfaserstoffe (Holzversiegelung), Textilien natürlicher oder synthetischer Herkunft, Kunststoffen, Glas, Keramik, Baustoffen, wie Beton, Faserplatten, Kunststeine, insbesondere jedoch auf Metall, wie Eisen, Aluminium, Kupfer udgl.. Die Metalloberflächen, insbesondere bei Eisen, können ggfs. durch Verzinken, Phosphatieren, Zinkphosphatieren etc. grundiert sein. Weiterhin können die erfindungsgemäßen Mischungen als Bestandteile von Klebern, Kitten, Laminierharzen, Kunstharzzementen und insbesondere als Bestandteile von Anstrichmitteln und Lacken zum Beschichten von Industriegegenständen, Haushaltgeräten, Möbeln sowie im Bauwesen, wie z.B. Kühlgeräten, Waschmaschinen, Elektrogeräten, Fenstern, Türen, eingesetzt werden. Das Aufbringen kann bespielsweise durch Streichen, Sprühen, Tauchen, elektrostabile Beschichtung udgl. erfolgen. Im Falle von elektrisch leitenden Substraten ist die elektrolytische Abscheidung bevorzugt.

Ein bevorzugtes Anwendungsgebiet für die erfindungsgemäßen Mischungen sind die Lackzubereitungen, insbesondere Elektrotauchlacke.

Die Erfindung wird durch die nachfolgenden Beispiele näher erläutert.

## Beispiele

### I. Herstellung des Bindemittels (B)

415 g (0,5 Mol) ®Capa 205 ($\alpha,\omega$-Polyesterdiol mit $\overline{M}$~830 der Fa. Interox), 550 g (0,5 Mol) ®Pluriol 3100 ($\alpha,\omega$-Polyetherdiol mit $\overline{M}$~1100 der Fa. BASF AG), 304 g (2 Mol) Tetrahydrophthalsäureanhydrid und 1,3 g Triethylamin wurden ca. 6 Stunden auf 110 bis 120 ° C erwärmt. Nachdem die Säurezahl einen Wert von 90 bis 92 (Theorie: 88) erreicht hatte, wurde auf 100 ° C abgekühlt. Die Reaktionsmischung wurde danach mit 832 g (2 Mol) Monocarbonat des Bisphenol A -Glycidylethers und 8,4 g AMC-2 (ChromIII-Salz einer Fettsäure; Fa. Cordova Chemical) versetzt und 3 Stunden bei 100 ° C nachgerührt. Als die Säurezahl den Wert von ≦ 10 und die Epoxidzahl den Wert von ≦ 0,1 erreicht hatten, wurde mit 905 g Diglykoldimethylether verdünnt und auf 70 ° C abgekühlt.

Die so erhaltene Harzlösung wurde anschließend mit 3144 g (3 Mol) Biscarbonat von ®Epicote 1001 (Epoxidharz auf Basis von Bisphenol H/Epichlorhydrin mit $\overline{M}$~4000, Fa. Shell), 608 g (2 Mol) Carbonat auf Basis von Versaticsäureglycidylester und 2167 g Methoxypropanol gemischt und anschließend mit 645 g (3 Mol) Bis-Hexamethylentriamin und 660 g (2 Mol) Trimethylhexyl-1,3-bis(6-aminohexylamino)-2-Propanol umgesetzt. Nach einer Reaktionszeit von 7 Stunden bei 70 ° C wurden die Aminzahl bestimmt.
Aminzahl: 55,5 (Theorie: 54,7)

### II. Herstellung der Isocyanathärter (A)

1. 160,23 g (0,92 Mol) Toluylendiisocyanat (technisches Produkt aus ca. 80 % 2,4-Toluylendiisocyanat und ca. 20% 2,6-Toluylendiisocyanat) wurden, in 200 ml Diethylenglykoldimethylether gelöst, bei Raumtemperatur vorgelegt. Zu dieser Lösung wurden protionsweise 41,14 g (0,307 Mol) 1,1,1-Tris-(hydroxymethyl)-propan gegeben, wobei die Temperatur bis auf 38 ° C anstieg. Nach 2,5 stündigem Rühren bei 35 ° C wurden 5 bis 8 Tropfen Dibutylzinndilaurat zugefügt. Die Temperatur erhöhte sich danach auf 47 ° C, und es wurde für weitere 3 Stunden bei 45 ° C nachgerührt. Zu der derart hergestellten Lösung des Adduktes von Toluylendiisocyanat mit 1,1,1-Tris(hydroxymethyl)propan wurden gleichfalls bei 45 ° C im Verlauf von 40 min 100,4 g (0,92 Mol) 2-(Hydroxymethyl)pyridin gegeben, wobei ein Temperaturanstieg bis auf 62 ° C zu beobachten war. Im Anschluß daran wurde 6 Stunden bei 65 ° C nachgerührt. Es wurde eine klare, gut gießbare Lösung erhalten, deren Gehalt an freien Isocyanatgruppen titrimetrisch mit < 0,1 % bestimmt wurde.
2. 174,16 g (1,0 Mol) Toluylendiisocyanat (technisches Produkt aus ca. 80% 2,4-Toluylendiisocyanat und ca. 20 % 2,6-Toluylendiisocyanat) wurden in 200 ml Diethylenglykoldimethylether gelöst, bei Raumtemperatur vorgelegt. Zu dieser Lösung wurden 44,72 g (0,33 Mol) 1,1,1-Tris-(hydroxymethyl)propan gegeben, worauf die Temperatur bis auf ca. 36 ° C anstieg. Nach 2,5 stündigem Rühren bei 35 ° C wurden 5 - 8 Tropfen Dibutylzinndilaurat zugefügt. Die Temperatur stieg daraufhin auf 50 ° C an, und es wurde anschließend 3 Stunden bei 45 ° C nachgerührt. Zu der derart hergestellten Lösung des Adduktes von Toluylendiisocyanat mit 1,1,1-Tris(hydroxymethyl)propan wurden gleichfalls bei 45 ° C im Verlauf von 80 min 109,13 g (1,0 Mol) 3-(Hydroxymethyl)-pyridin zugetropft, wobei ein Temperaturanstieg auf 62 ° C beobachtet wurde. Anschließend wurde 6 Stunden bei 65 ° C nachgerührt und anschließend mit 65 ml Diethylenglykoldimethylether verdünnt. Der titrimetrisch bestimmte Gehalt an freien Isocyanatgruppen

lag unterhalb von 0,1 %.

3. 104,5 g (0,6 Mol) Toluylendiisocyanat (technisches Produkt aus ca. 80 % 2,4-Toluylendiisocyanat und ca. 20 % 2,6-Toluylendiisocyanat) wurden, in 180 ml Diethylenglykoldimethylether gelöst, bei Raumtemperatur vorgelegt. Zu dieser Lösung wurden 26,84 g (0,2 Mol) 1,1,1-Tris-(hydroxymethyl)propan gegeben, wobei die Temperatur auf bis zu 35 ° C anstieg. Bei dieser Temperatur wurden weitere 3,5 Stunden nachgerührt, dann 5 bis 8 Tropfen Dibutylzinndilaurat zugegeben und anschließend weitere 3 Stunden bei 45 ° C nachgerührt. Zu der derart hergestellten Lösung des Adduktes von Toluylendiisocyanat an 1,1,1-Tris-(hydroxymethyl)propan wurden gleichfalls bei 45 ° C innerhalb von 10 min. 65,48 g (0,6 Mol) 4-(Hydroxymethyl)pyridin gegeben. Das 4-(Hydroxymethyl)pyridin löste sich zügig auf, und die exotherme Reaktion ließ die Temperatur des Reaktionsgemisches auf 70 ° C ansteigen. Es wurde 6 Stunden bei 65 ° C nachgerührt und die breiige Suspension mit 29 ml Diethylenglykoldimethylether verdünnt. In dem Reaktionsprodukt ließen sich freie Isocyanatgruppen titrimetrisch nicht mehr nachweisen.

4. 104,5 g (0.6 Mol) Toluylendiisocyanat (technisches Produkt aus ca. 80 % 2,4-Toluylendiisocyanat und ca. 20 % 2,6-Toluylendiisocyanat) wurden, in 180 ml Diethylenglykoldimethylether gelöst, bei Raumtemperatur vorgelegt. Zu dieser Lösung wurden 26,84 g (0.2 Mol) 1,1,1-Tris-(hydroxymethyl)propan gegeben, wobei die Temperatur auf 35 ° C anstieg. Bei dieser Temperatur wurde 2,5 Stunden nachgerührt, dann 5 - 8 Tropfen Dibutylzinndilaurat zugegeben und anschließend weitere 3 Stunden bei 45 ° C gerührt. Zu der derart hergestellten Lösung des Adduktes von Toluylendiisocyanat mit 1,1,1-Tris-(hydroxmethyl)-propan wurden gleichfalls bei 45 ° C innerhalb von 10 min 32,74 g (0,3 Mol) 2-Hydroxymethyl)pyridin sowie 32,73 g (0,3 Mol) 3-(Hydroxymethyl)pyridin gegeben. Die Temperatur des Reaktionsgemisches stieg auf 69 ° C an. Es wurde 6 Stunden bei 65 ° C nachgerührt. Man erhielt eine klare, gut gießbare Lösung, deren Gehalt an freien Isocyanatgruppen titrimetrisch mit < 0,1 % bestimmt wurde.

5. 104,5 g (0,6 Mol) Toluylendiisocyanat (technisches Produkt aus ca. 80 % 2,4-Toluylendiisocyanat und ca. 20 % 2,6-Toluylendiisocyanat wurden, in 180 ml Diethylenglykoldimethylether gelöst, bei Raumtemperatur vorgelegt. Zu dieser Lösung wurden 26,84 g (0,2 Mol) 1,1,1-Tris-(hydroxymethyl)propan gegeben, worauf die Temperatur auf 35 ° C anstieg. Bei dieser Temperatur rührte man 2,5 Stunden nach, gab dann 5 - 8 Tropfen Dibutylzinndilaurat zu und rührte anschließend weitere 3 Stunden bei 45 ° C nach. Zu der derart hergestellten Lösung des Adduktes von Toluylendiisocyanat mit 1,1,1-Tris-(hydroxymethyl)propan wurden gleichfalls bei 45 ° C innerhalb von 10 min 32,74g (0,3 Mol) 2-(Hydroxymethyl)pyridin sowie 32,75 g (0,3 Mol) 4-(Hydroxymethyl)pyridin gegeben. Die Temperatur des Reaktionsgemisches stieg auf 74 ° C an. Es wurde 6 Stunden bei 65 ° nachgerührt. Man erhielt eine klare, gut gießbare Lösung, deren Gehalt an freien Isocyanatgruppen titrimetrisch mit < 0,1 % bestimmt wurde.

## III. Ausprüfung der Härter

Die mit (Hydroxymethyl)pyridinen blockierten Isocyanate der Beispiel II. 1 - 5 und analog hergestellte Vergleichsprodukte wurden mit dem im Beispiel I beschriebenen Bindemittel jeweils im Massenverhältnis 30:70 (bezogen auf Feststoff) gemischt und in Gegenwart eines Metallsalzes (1 % Metall auf Festharz) auf phosphatierten Blechen aufgetragen (Schichtdicke des Naßfilms; 100 µm).

Die Lackfilme wurden 30 min bei 120 bis 130 ° C eingebrannt und auf ihre Lösungsmittelfestigkeit untersucht. Ein Lackfilm wurde dann als gehärtet angesehen, wenn er nach mindestens 50 Doppelwischungen mit einem mit Methylethylketon getränkten Wattebausch bei einem Auflagedruck von 1 kp nicht angelöst wurde.

In der nachfolgenden Tabelle 1 werden Lösungsmittelbeständigkeiten verschiedener Lackfilme miteinander verglichen. Daraus kann man entnehmen, daß diejenigen Isocyanataddukte, die 3,5-Dimethyl-pyrazol und 2-Heptanonoxim als Schutzgruppe enthalten, in ihren Härtungseigenschaften dem nach Beispiel II.1 hergestellten und beispielhaft aufgerührten Härter vergleichbar sind. Demgegenüber besitzen mit Furfurylalkohol und Glykolsäuredibutylamid verkappte Polyisocyanate eine deutlich geringere Lösungsmittelbeständigkeit.

Vergleicht man die Lagerbeständigkeit der blockierten Isocyanate bei 30 bis 40 ° C in Gegenwart sekundärer Amine, so zeigt sich, daß der nach Beispiel II.1. hergestellte Härter in Anwesenheit von Dibutylamin beständig ist, während die mit 2-Heptanonoxim und 3,5-Dimethyl-pyrazol verkappten Polyisocyanate bereits bei 30 ° C von Dibutylamin angegriffen werden.

Zur quantitativen Bestimmung der Austauschreaktion der Schutzgruppen durch Dibutylamin wurden Isocyanathärter in einem Gemisch aus Isopropanol und Dioxan nach Zugabe einer abgemessenen Menge Dibutylamin 4 Stunden auf 30 bzw. 40 ° C erwärmt, und der nicht umgesetzte Anteil des Dibutylamins wurde mit 0,1 n Salzsäure zurücktitriert. Der durch Dibutylamin ausgetauschte Anteil der Urethangruppe wurde in

% NCO angegeben. Die Ergebnisse sind in der Tabelle 2 zusammengefaßt.

**Tabelle 1**

| Schutzgruppe | Polyisocyanat | Katalysator | Anzahl der MEK-Doppelwischungen (120°C) | (130°C) |
|---|---|---|---|---|
| 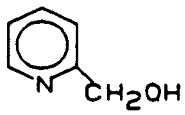 | TDI[1]/TMP[2] | Sn | 20 | 100 |
| | | Pb | 100 | 100 |
| (gemäß Beispiel II.1.) | | | | |
| 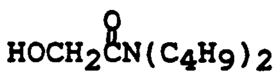 | TDI/TMP | Sn | 20 | 50 |
| | | Pb | 30 | 90 |
| (gemäß EP 118.743) | | | | |
| 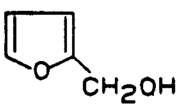 | TDI/TMP | Sn | 5 | 5 |
| | | Pb | 5 | 5 |
| (gemäß EP 205.071) | | | | |
| 2-Heptanonoxim (gemäß EP 189.727 | TDI/TMP | Pb | 100 | 100 |
| 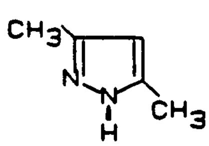 | IPDI[3]/TMP | Pb | ca. 50 | 100 |
| (EP 159.117) | | | | |

1) = 80 % 2,4-Toluylendiisocyanat
20 % 2,6-Toluylendiisocyanat
2) = Trimethylolpropan
3) = Isophorondiisocyanat

**Tabelle 2**

| Schutzgruppe | Polyisocyanat | austauschbare Schutzgruppen in % NCO<br>4 h, 30°C | <br>4 h, 40°C |
|---|---|---|---|
| 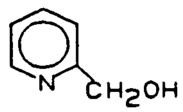<br>(gemäß Beispiel II.1.) | TDI/TMP | 0 | 0 |
| 2-Heptanonoxim<br>(gemäß EP 189.727) | TDI/TMP | 0,06 | 0,30 |
| 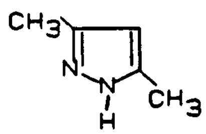<br>(gemäß EP 159.117) | IPDI/TMP | 0,12 | 0,71 |

## Patentansprüche

1. Härtungskomponente (A) auf Basis von Polyisocyanaten für Bindemittel (B), die Gruppen mit aktiven Wasserstoff enthalten, dadurch gekennzeichnet, daß die Härtungskomponente (A) ein Umsetzungsprodukt aus (a1) Polyisocyanaten mit (a2) α-Hydroxyalkylpyridinen darstellt.

2. Härtungskomponente nach Anspruch 1, dadurch gekennzeichnet, daß die α-Hydroxyalkylpyridine (a2) die allgemeine Formel (I)

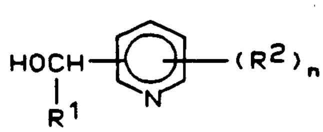 (I)

besitzen, worin

$R^1$ = H, verzweigtes oder unverzweigtes Alkyl mit 1 bis 12 C-Atomen, Alkenyl mit 2 bis 12 C-Atomen, Cycloalkyl mit 6 bis 12 C-Atomen oder Aryl,

$R^2$ = H, verzweigtes oder unverzweigtes Alkyl mit 1 bis 12 C-Atomen, $(C_1$-$C_6)$Alkoxy, Di$(C_1$-$C_6)$-alkylamino oder Halogen, wobei bei $n > 1$ die Reste $R^2$ gleich oder verschieden sein können,

n = 1 bis 3,

bedeuten.

3. Härtungskomponente nach Anspruch 2, dadurch gekennzeichnet, daß die Reste $R^1$ und $R^2$ sowie der Index n folgende Bedeutung haben:

$R_1$ = H oder unverzweigtes ($C_1$ bis $C_6$)-Alkyl, Phenyl,

$R_2$ = H oder unverzweigtes ($C_1$ bis $C_6$)-Alkyl, $(C_1$-$C_6)$-Alkoxy,

n = 1.

**4.** Härtungskomponente nach mindestens einem der Ansprüche 1 bis 3, dadurch gekennzeichnet, daß als α-Hydroxyalkylpyridine, 2-Hydroxymethylpyridin, 3-Hydroxymethylpyridin, 4-Hydroxymethylpyridin, 2-, 3-und 4-(α-Hydroxyethyl)pyridin, 2-, 3- und 4-(α-Hydroxypropyl)pyridin, 2-(Hydroxymethyl)-4-methylpyridin, 2-(Hydroxymethyl)-5-ethylpyridin, 2-(Hydroxymethyl)-6-methylpyridin, 4-(Hydroxybenzyl)-pyridin, 2-(Hydroxymethyl)-6-chlorpyridin oder 3-(Hydroxymethyl)-6-brompyridin oder entsprechende Gemische eingesetzt werden.

**5.** Härtungskomponente nach mindestens einem der Ansprüche 1 bis 4, dadurch gekennzeichnet, daß das Äquivalentverhältnis von Isocyanatgruppen der Polyisocyanate (a1) zu OH-Gruppen der α-Hydroxyalkylpyridine (a2) 2,2 bis 0,9 zu 1 beträgt.

**6.** Härtungskomponente nach mindestens einem der Ansprüche 1 bis 4, dadurch gekennzeichnet, daß als Polyisocyanate (a1) Di- oder Triisocyanate eingesetzt werden.

**7.** Härtungskomponente nach mindestens einem der Ansprüche 1 bis 6, dadurch gekennzeichnet, daß sie mit dem Bindemittel (B) chemisch (direkt) verbunden ist.

**8.** Härtbare Mischung auf Basis
einer Härtungskomponente (A),
eines Bindemittels (B), das Gruppen mit aktiven Wasserstoff enthält,
gegebenenfalls einem Verdünnungsmittel (C), sowie
gegebenenfalls Zusatzstoffen (D), dadurch gekennzeichnet, daß als Härtungskomponente die Komponente (A) gemäß einem oder mehreren der Ansprüche 1 bis 6 enthalten ist.

**9.** Härtbare Mischung nach Anspruch 8, dadurch gekennzeichnet, daß die Härtungskomponente (A) bereits mit mindestens einem Teil des Bindemittels (B) umgesetzt wurde.

**10.** Härtbare Mischung nach Anspruch 8 und/oder 9, dadurch gekennzeichnet, daß das Bindemittel (B) ein mittleres Molekulargewicht ($\overline{M}_n$) von etwa 1000 bis etwa 20000 aufweist und Hydroxyl-Gruppen und/oder Aminogruppen enthält.

**11.** Verwendung der Härtungskomponente gemäß mindestens einem der Ansprüche 1 bis 7 in härtbaren Mischungen, insbesondere Lackzubereitungen.

**12.** Verwendung nach Anspruch 11, dadurch gekennzeichnet, daß es sich bei den Lackzubereitungen um Elektrotauchlacke handelt.

**Claims**

**1.** A curing component (A) based on polyisocyanates, for binders (B) which contain groups containing active hydrogen, wherein the curing component (A) is a product of the reaction of (a1) polyisocyanates with (a2) α-hydroxyalkylpyridines.

**2.** A curing component as claimed in claim 1, wherein the α-hydroxyalkylpyridines (a2) have the formula (I)

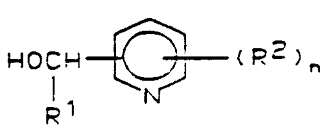

(I)

in which

$R^1$ denotes H, branched or unbranched alkyl having 1 to 12 carbon atoms, alkenyl having 2 to 12 carbon atoms, cycloalkyl having 6 to 12 carbon atoms or aryl,

$R^2$ denotes H, branched or unbranched alkyl having 1 to 12 carbon atoms, $(C_1-C_6)$alkoxy, di$(C_1-C_6)$alkylamino or halogen, where, in the case where n > 1, the radicals $R^2$ may be identical or different, and

n denotes 1 to 3.

**3.** A curing component as claimed in claim 2, wherein the radicals $R^1$ and $R^2$ and the index n have the following meanings:
$R^1$ = H or unbranched ($C_1$ to $C_6$)alkyl or phenyl,
$R^2$ = H or unbranched ($C_1$ to $C_6$)alkyl or ($C_1$-$C_6$)alkoxy, and
n = 1.

**4.** Curing component as claimed in one or several of claims 1 to 3, wherein the α-hydroxyalkylpyridine employed is 2-hydroxymethylpyridine, 3-hydroxymethylpyridine, 4-hydroxymethylpyridine, 2-, 3- or 4-(α-hydroxyethyl)pyridine, 2-, 3- or 4-(α-hydroxypropyl)pyridine, 2-(hydroxymethyl)-4-methylpyridine, 2-(hydroxymethyl)-5-ethylpyridine, 2-(hydroxymethyl)-6-methylpyridine, 4-(hydroxybenzyl)pyridine, 2-(hydroxymethyl)-6-chloropyridine or 3-(hydroxymethyl)-6-bromopyridine, or appropriate mixture.

**5.** A curing component as claimed in one or several of claims 1 to 4, wherein the ratio between the number of equivalents of isocyanate groups of the polyisocyanates (a1) and the OH groups of the α-hydroxyalkylpyridines (a2) is 2.2 to 0.9:1.

**6.** A curing component as claimed in one or several of claims 1 to 4, wherein the polyisocyanates (a1) employed are diisocyanates or triisocyanates.

**7.** A curing component as claimed in one or several of claims 1 to 6, wherein it is (directly) bound chemically to the binder (B).

**8.** A curable mixture based on
a curing component (A),
a binder (B), which contains groups containing active hydrogen,
if appropriate a diluent (C) and
if appropriate additives (D), wherein the curing component present is component (A) as claimed in one or several of claims 1 to 6.

**9.** A curable mixture as claimed in claim 8, wherein the curing component (A) has already been reacted with at least some of the binder (B).

**10.** A curable mixture as claimed in claim 8 and/or claim 9, wherein the binder (B) has a mean molecular weight ($\overline{M}_n$) from about 1,000 to about 20,000 and contains hydroxyl groups and/or amino groups.

**11.** The use of a curing component as claimed in one or several of claims 1 to 7 in curable mixtures, in particular surface-coating preparations.

**12.** The use as claimed in claim 11, wherein the surface-coating preparations are electrocoating materials.

**Revendications**

**1.** Composante de durcissement (A) à base de poly-isocyanates pour liants (B) contenant des radicaux à hydrogène actif, caractérisée en ce que la composante de durcissement (A) est un produit résultant de la réaction de poly-isocyanates (a1) avec des α-hydroxyalkyl-pyridines (a2).

**2.** Composante de durcissement selon la revendication 1 caractérisée en ce que les α-hydroxyalkyl-pyridines (a2) répondent à la formule I :

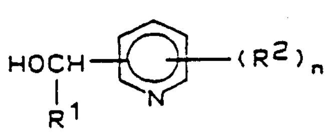

(I)

dans laquelle :

$R^1$ représente H, un alkyle ramifié ou non ramifié qui contient de 1 à 12 atomes de carbone, un alcényle contenant de 2 à 12 atomes de carbone, un cycloalkyle contenant de 6 à 12 atomes de carbone ou un radical aryle,

$R^2$ représente H, un alkyle ramifié ou non ramifié qui contient de 1 à 12 atomes de carbone, un alcoxy en $C_1$-$C_6$, un di($C_1$-$C_6$)alkylamino ou un halogène, les radicaux $R^2$ dans le cas où n est supérieur à 1, pouvant être identiques ou différents, et

n désigne un nombre de 1 à 3.

**3.** Composante de durcissement selon la revendication 2 caractérisée en ce que les radicaux $R^1$ et $R^2$ ainsi que l'indice n ont les significations suivantes :
$R^1$ = H, un alkyle non ramifié en $C_1$-$C_6$ ou un phényle,
$R^2$ = H, un alkyle non ramifié en $C_1$-$C_6$ ou un alcoxy en $C_1$-$C_6$,
n = 1.

**4.** Composante de durcissement selon au moins une des revendications 1 à 3, caractérisée en ce que les α-hydroxyalkyl-pyridines sont prises dans l'ensemble constitué par la 2-hydroxyméthyl-pyridine, la 3-hydroxyméthyl-pyridine, la 4-hydroxyméthyl-pyridine, les 2-, 3- et 4-(α-hydroxyéthyl)-pyridines, les 2-, 3- et 4-(α-hydroxypropyl)-pyridines, la 2-hydroxyméthyl-4-méthyl-pyridine, la 2-hydroxyméthyl-5-éthyl-pyridine, la 2-hydroxyméthyl-6-méthyl-pyridine, la 4-(hydroxybenzyl)-pyridine, la 2-hydroxyméthyl-6-chloro-pyridine, 3-hydroxyméthyl-6-bromo-pyridine et les mélanges correspondants.

**5.** Composante de durcissement selon au moins une des revendications 1 à 4, caractérisée en ce que le rapport, en équivalents, des radicaux isocyanato des poly-isocyanates (a1) aux radicaux -OH des α-hydroxyalkyl-pyridines (a2) est compris entre 2,2:1 et 0,9:1.

**6.** Composante de durcissement selon au moins une des revendications 1 à 4, caractérisée en ce que les poly-isocyanates (a1) sont des diisocyanates ou des triisocyanates.

**7.** Composante de durcissement selon au moins une des revendications 1 à 6, caractérisée en ce qu'elle est liée chimiquement (directement) au liant (B).

**8.** Mélange durcissable à base :
d'une composante de durcissement (A),
d'un liant (B) contenant des radicaux à hydrogène actif,
éventuellement d'un diluant (C) et
éventuellement d'additifs (D),
caractérisé en ce qu'il contient comme composante de durcissement la composante (A) selon une ou plusieurs des revendications 1 à 6.

**9.** Mélange durcissable selon la revendication 8, caractérisé en ce que la composante de durcissement (A) a déjà réagi avec au moins une partie du liant (B).

**10.** Mélange durcissable selon les revendications 8 et/ou 9, caractérisé en ce que le liant (B) a une masse moléculaire moyenne ($\overline{M}_n$) comprise entre environ 1.000 et environ 20.000 et contient des radicaux hydroxy et/ou des radicaux amino.

**11.** Application de la composante de durcissement selon au moins une des revendications 1 à 7 dans des mélanges durcissables, plus particulièrement dans des compositions pour peintures et vernis.

**12.** Application selon la revendication 11, caractérisée en ce que les compositions pour peintures et vernis sont des peintures pour trempage électrophorétique.